**Europäisches Patentamt**

(19) **European Patent Office**

**Office européen des brevets**

(11) Veröffentlichungsnummer: **0 194 561**
**B1**

(12) **EUROPÄISCHE PATENTSCHRIFT**

(45) Veröffentlichungstag der Patentschrift:
18.01.89

(51) Int. Cl.⁴: **E21C 35/22**

(21) Anmeldenummer: **86102843.9**

(22) Anmeldetag: **04.03.86**

---

(54) **Drehdurchführung.**

---

(30) Priorität: **07.03.85 DE 3508076**
**08.08.85 DE 3528441**
**05.11.85 DE 3539226**

(43) Veröffentlichungstag der Anmeldung:
**17.09.86 Patentblatt 86/38**

(45) Bekanntmachung des Hinweises auf die Patenterteilung:
**18.01.89 Patentblatt 89/3**

(84) Benannte Vertragsstaaten:
**AT CH DE FR GB LI**

(56) Entgegenhaltungen:
**EP-A- 0 106 834**
**EP-A- 0 122 252**
**EP-A- 0 125 232**
**DE-A- 3 232 878**
**GB-A- 1 110 763**
**GB-A- 2 015 625**
**GB-A- 2 089 868**
**GB-A- 2 132 255**

(73) Patentinhaber: **Rudolf Hausherr & Söhne GmbH & Co KG, Wuppertaler Strasse 77, D-4322 Sprockhövel 1(DE)**

(72) Erfinder: **Strotkamp, Volker, Dipl.-Ing., Westerwinkel 83, D-4600 Dortmund 70(DE)**
Erfinder: **Wolkenar, Paul, Steinstrasse 29, D-4670 Lünen(DE)**
Erfinder: **Schürmann, Horst, Im Lichtenbruch 22, D-4320 Hattingen(DE)**

(74) Vertreter: **Spalthoff, Adolf, Dipl.-Ing., Pelmanstrasse 31 Postfach 34 02 20, D-4300 Essen 1(DE)**

---

ACTORUM AG

## Beschreibung

Die Erfindung betrifft eine Drehdurchführung zur Beaufschlagung der Schneiden von Werkzeugen von Vortriebs- und Abbaumaschinen für den Berg- oder Tunnelbau mit einer Flüssigkeit, bestehend aus einem mit einer Flüssigkeitszufuhr verbundenen Stator und einem diesen umgebenden Rotor mit mehreren Abgängen zur Bedüsung der Schneiden der Werkzeuge, wobei Stator und Rotor zum Durchtritt der Flüssigkeit über Kanäle oder dgl. miteinander verbunden sind, und die Abgänge des Rotors diesen radial durchsetzen und diesen mindestens ein radial angeordneter Kanal des Stators zugeordnet ist, welcher in einen axial verlaufenden Kanal des Stators einmündet.

Es ist bekannt, die Werkzeuge der Fräswalzen von Vortriebs- und Abbaumaschinen mittels Wasser zum Zwecke der Kühlung sowie der Staubbekämpfung zu besprühen. Zu diesem Zwecke finden Drehdurchführungen Verwendung, welche aus einem Rotor und einem Stator bestehen. Das über den Stator zentral zugeführte Wasser tritt radial über Ausgänge des Rotors aus und wird von diesen über Verbindungsleitungen zu den jeweils zu bedüsenden Schneiden der Werkzeuge geleitet. Der Nachteil der bekannten Drehdurchführungen besteht darin, daß ständig alle Werkzeuge der Maschine bei jedem Umlauf mit Wasser bedüst werden, unabhängig davon, ob diese sich im Eingriff mit dem zu schneidenden Material befinden oder aber außerhalb des eigentlichen Schneidbereiches. Diese ständige Bedüsung der Werkzeuge während eines Umlaufs führt nicht nur zu einem vergleichsweise hohen Wasserverbrauch, sondern erfordert auch eine hohe Pumpenleistung. Außerdem sind Stator und Rotor aus Gußeisen oder Gußstahl hergestellt, so daß bei Durchströmen von Wasser keinerlei Schmierwirkung vorhanden ist, was zu einem hohen Abrieb und damit zu einem starken Verschleiß und außerdem zu Korrosion führt, mit einer starken Beeinträchtigung der Lebensdauer dieser Teile der bekannten Drehdurchführungen.

Eine Drehdurchführung der gattungsgemäßen Art mit einer sektoriellen Bedüsung der Schneiden von Werkzeugen der zugehörigen Maschine ist bekannt durch die EP-A 0 106 834. Bei dieser bekannten Drehdurchführung wird die Flüssigkeit über eine axiale ortsfeste Bohrung einem Verteilerraum zugeführt und gelangt über radiale, in den Verteilerraum mündende Kanäle zu Austrittsöffnungen an der Peripherie des rotierenden Maschinenteils. Der Verteilerraum ist als die axiale Bohrung koaxial umgebender, stirnseitig geschlossener, zylindrischer Ringraum ausgebildet, dessen Mantel ortsfest angeordnet ist. An den Ringraum schließen in wenigstens einer Axialebene in Achsrichtung versetzt wenigstens zwei radiale Bohrungen in entgegengesetzter radialer Richtung an. Der rotierende Maschinenteil ist dichtend am drehfesten Mantel des Ringraumes geführt. Der zylindrische Ringraum ist von einer das die axiale Bohrung aufweisende Zuführungsrohr übergreifenden Büchse begrenzt. Die axiale Bohrung ist als Sackbohrung ausgebildet und mündet über wenigstens eine radiale Durchbrechung in den Ringraum ein. Der stirnseitig geschlossene Endbereich des Zuführungsrohres ist dichtend in der Stirnseite der Büchse angeordnet. Bei dieser bekannten Drehdurchführung erweist es sich als nachteilig, daß diese vergleichsweise aufwendig herzustellen und zu montieren ist, und außerdem die Dichtwirkung zwischen den einzelnen Abgängen des Rotors gegenüber dem Stator zu wünschen übrig läßt.

Durch die DE-A 3 232 878 ist eine Radialdrehdurchführung für Druckmedien bekannt, die von einem festen Gehäuse in ein rotierendes Teil überführt werden. Zwischen dem festen Gehäuse und dem rotierenden Teil sind beiderseits die Radial-Durchführung axial gegeneinander wirkende Gleitringdichtungspaare vorgesehen, wobei die angrenzenden Flächen der Gleitringdichtungen des einen Paares axial gegeneinander wirken und die Innenkeilflächen der Gleitringdichtungen mit Öl geschmiert und deren radial äußere Flächen vom Druckmedium beaufschlagt ist. Die Aufgabe dieser bekannter Drehdurchführung besteht darin, auch bei hohen Drücken eine einwandfreie Abdichtung und damit Trennung der Ölschmierung vom Druckmedium zu gewährleisten.

Durch die GB-A 2 132 255 ist eine Vorrichtung zum Steuern von Hochdruckflüssigkeit, insbesondere zur Flüssigkeitszufuhr zu den im Bereich der Schneidwerkzeuge oder auf dem Umfang einer Schrämwalze angeordneten Düsen bekannt. Bei dieser bekannten Vorrichtung steht eine zentrisch zur Schrämwalzenachse angeordnete, mit der Schrämwalzendrehzahl und in Schrämwalzendrehrichtung umlaufende Welle mit ihrem Ende aus dem Tragarm der Schrämwalze vor. Sie trägt eine Drehdurchführung zur Einleitung der Hochdruckflüssigkeit in die rotierende Schrämwalze und das Gehäuse, über das die Beaufschlagung der einzelnen Ventile gesteuert wird, die die Hochdruckflüssigkeit nur den auf den Abbaustoß gerichteten Düsen zuführen. Das Gehäuse der Drehdurchführung weist in seiner Zentralbohrung eine zweiteilige Stopfbuchsenpackung auf, deren beide Teile in axialer Richtung durch eine Druckfeder gespannt sind. Die Stopfbuchsenpackung wird beidseitig von je einer Bundbüchse begrenzt, deren Bund von einem in einer Eindrehung des Gehäuses gelagerten Dichtungsring umschlossen ist. Beide Bundbüchsen liegen in einer Bohrung je eines fest mit dem Gehäuse der Drehdurchführung verschraubten Deckels, aus der sie mit ihrem Bund vorstehen. Über eine Radialbohrung des Gehäuses, die mit einem Gewindeansatz versehen ist, tritt die Hochdruckflüssigkeit in den von der Schraubenfeder freigehaltenen Ringraum zwischen die beiden stirnseitigen Scheiben der Stopfbuchsenpackung ein und gelangt über die Radialbohrung und die Zentralbohrung der Welle zu den Ventilen innerhalb der Schrämwalze. Diese bekannte Drehdurchführung erweist sich hinsichtlich der zu ihrer Abdichtung vorgesehenen Mittel als vergleichsweise aufwendig.

Von diesem Stand der Technik ausgehend liegt der Erfindung die Aufgabe zugrunde, unter Vermeidung vorerwähnter Nachteile eine Drehdurchführung der eingangs genannten Art zu schaffen, welche in einfacher Weise herzustellen und zu montieren ist, über eine lange Lebensdauer verfügt und außerdem eine hohe Dichtwirkung und damit Leckagefreiheit der einzelnen Abgänge des Rotors gegenüber dem Stator aufweist.

Gemäß der Erfindung wird dies dadurch erreicht, daß die Abgänge des Rotors mit Büchsen ausgerüstet sind, deren eine Stirnflächen auf der Umfläche des Stators aufliegen und deren andere Stirnflächen unter der Einwirkung von Federn stehen. Die Büchsen liegen somit unter der Federwirkung auf dem Stator auf, so daß zwischen den bewegten Teilen eine Flächenberührung besteht, welche zu einer niedrigen Flächenpressung führt, so daß auch bei Durchtritt des Wassers ein Verschleiß praktisch nicht gegeben ist.

Vorteilhaft besitzt der Stator im Bewegungsbereich der Abgänge des Rotors einen Endteil, welcher mittels Schraubbolzen mit dem übrigen Teil des Stators verbunden ist.

Durch diese Auslegung ist es möglich, durch Lösen der Schraubbolzen von außen diesen Endteil des Stators auszuwechseln, so daß beispielsweise ein anderer Sektor bestrichen werden kann.

In weiterer Ausgestaltung der Erfindung ist bzw. sind in der Umfläche des Stators im Bewegungsbereich der Abgänge des Rotors eine oder mehrere in dessen Umfangsrichtung verlaufende Ausnehmung bzw. Ausnehmungen derart angebracht und bemessen, daß diese jeweils mindestens zwei benachbarte Abgänge des Rotors mit dem radialen Kanal des Stators verbindet bzw. verbinden. Auch auf diese Weise ist eine ganz bestimmte Einstellung eines gewünschten Sektors zur Bedüsung der sich im Eingriff befindenden Werkzeuge der Maschine möglich.

Zu diesem Zwecke können im Stator auch mehrere, vorzugsweise drei, radiale Kanäle von dem axialen Zuführungskanal ausgehen, so daß ebenfalls ein ganz bestimmter Sektor von Werkzeugen mit Wasser bedüst wird.

In der Anzahl der Kanäle sowie Anbringung von Ausnehmungen bzw. deren Länge bestehen keine Beschränkungen.

Gemäß einem weiteren Merkmal der Erfindung sind mindestens der eine Endteil des Stators und/oder die Büchsen der Abgänge des Rotors aus Keramik hergestellt, so daß nicht nur eine Korrosion mit Sicherheit ausgeschlossen ist, sondern auch durch das zu fördernde Wasser, welches über keine Schmierwirkung verfügt, ein Verschleiß nicht auftreten kann.

Um einen Druckaufbau zwischen dem Stator und seinem davorgesetzten Endteil zu vermeiden und die Herstellung, insbesondere in bezug auf die Büchsen in den Abgängen des Rotors zu vereinfachen, wird erfindungsgemäß weiterhin vorgeschlagen, daß der Stator sich mit seinem vom Rotor umgebenden Ende in eine Büchse erstreckt, welche mittels eines Bodens einendig geschlossen ist und mindestens eine, diese radial durchsetzende Durchtrittsöffnung aufweist. Der Endteil nach der vorgenannten Ausführung wird somit nicht mehr vor den Stator gesetzt, sondern umgibt diesen in Form einer Büchse, so daß sich der Stator mit seinem Ende bis auf den Boden der Büchse erstreckt. Auf diese Weise wird ein Druckaufbau zwischen dem Stator und dem Endteil nach der vorgenannten Ausführung ausgeschlossen.

Der Boden der Büchse ist von Schraubbolzen durchsetzt, die axial in den Stator eingeschraubt sind. Durch Lösen dieser Schrauben läßt sich das ganze Verteilergehäuse schnell und einfach ausbauen und/oder verstellen.

Vorteilhaft ist auf die Büchse ein Rohrstück aufgeschoben, welches entsprechend der Anzahl der Abgänge des Rotors mit radialen Durchtritten ausgerüstet ist, die mit den Abgängen des Rotors verbunden sind. Dieses übergeschobene Rohrstück ersetzt die einzelnen Büchsen in den Abgängen des Rotors nach der vorgenannten Ausführung, so daß nur noch ein Bauteil vorhanden ist, welches sich wesentlich einfacher fertigen läßt als die einzelnen, genau der Umfläche des Stators anzupassenden Büchsen. Bei dieser Ausführung wird etwas mehr Leckage in Kauf genommen als bei der nach vorgenannter Ausführung, jedoch ist dieses bei Beaufschlagung mit Wasser ohne weiteres möglich und wiegt die erheblich aufwendigere Fertigung bei weitem auf. Das Rohrstück ist in eine entsprechend gestaltete Ausnehmung des Rotors eingesetzt, so daß sich eine kompakte Bauweise ergibt.

Um eine besonders einfache Einstellung eines anderen Sektors der Drehdurchführung zu vereinfachen wird erfindungsgemäß vorgeschlagen, daß das hintere Ende des Stators mit einem Schwenkantrieb gekuppelt ist und das von einem oder mehreren Rotoren umgebende Ende des Stators in seiner Umfläche im Bereich der Abgänge des Rotors bzw. der Rotoren mit einer oder mehreren Ringnuten ausgerüstet ist, welche sich über einen Teil des Umfanges des Stators erstreckt bzw. erstrecken. Durch diese Ausgestaltung der Drehdurchführung ergibt sich eine verstellbare Steuerung für die jeweils gewünschten Sektoren, und zwar lediglich durch Beaufschlagung des Schwenkantriebes, welcher eine Bewegung um einen bestimmten gewünschten Winkel durchführt, so daß ein neuer Sektor mit der Flüssigkeit beaufschlagt wird.

Der Rotor besteht vorteilhaft aus einer Scheibe, welche von den Abgängen radial durchsetzt ist. Bei Verwendung mehrerer Rotoren ist es möglich, derartige Scheiben unmittelbar nebeneinander auf dem Rotor anzuordnen. Es ist jedoch auch möglich, zwei oder mehrere Rotoren in einem gemeinsamen Gehäuse unterzubringen.

Zur Beaufschlagung der einzelnen Rotoren weist der Starttor jeweils einen Längskanal auf, welcher über einen mit ihm in Verbindung stehenden radialen Kanal mit den Abgängen des zugehörigen Rotors in Verbindung steht.

Bei Vorhandensein eines Rotors erstreckt sich die Ringnut beispielsweise über einen Winkelbereich von 150 Grad. Sind mehrere Rotoren vorhanden, beispielsweise zwei, überschneiden die deren Abgängen zugeordneten Ringnuten um einen gewissen Bereich. Die Ringnuten können beispielsweise jeweils Bereiche von 90 Grad überdecken und gegeneinander um einen solchen Bereich auch versetzt sein, wobei sich allerdings ein gewisser Überschneidungsbereich ergibt.

Die Erfindung ist an Hand von Ausführungsbeispielen näher erläutert, und zwar zeigt:

Figur 1 eine teilweise geschnittene Seitenansicht einer ersten Ausführung der Drehdurchführung,

Figur 2 eine geschnittene Ansicht gemäß der Linie II–II der Figur 1,

Figur 3 eine geschnittene Ansicht gemäß Figur 2, jedoch mit einer Abänderung des Stators,

Figur 4 eine geschnittene Ansicht gemäß Figur 2, jedoch mit einer weiteren Abänderung des Stators,

Figur 5 eine geschnittene Seitenansicht einer zweiten Ausführung der Drehdurchführung,

Figur 6 eine geschnittene Seitenansicht einer dritten Ausführungsform der Drehdurchführung,

Figur 7 eine Vorderansicht der Figur 6,

Figur 8 eine Vorderansicht einer abgewandelten Ausführung der Figur 6,

Figur 9 eine Vorderansicht einer weiteren abgewandelten Ausführung der Figur 6,

Figur 10 eine geschnittene Seitenansicht einer vierten Ausführung der Drehdurchführung,

Figur 11 eine Vorderansicht der Figur 10 und

Figur 12 einen Schnitt gemäß der Linie A–B der Figur 10.

Die Drehdurchführung ist in herkömmlicher Weise entweder in eine Vortriebs- und Abbaumaschine eingebaut oder aber läuft mit deren, mit Werkzeugen bestückten Walze synchron um, damit die einzelnen Werkzeuge mit Wasser bedüst werden.

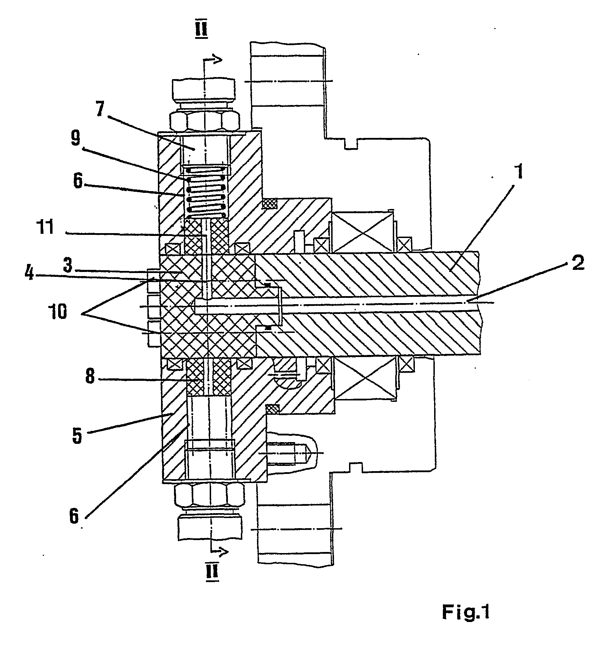

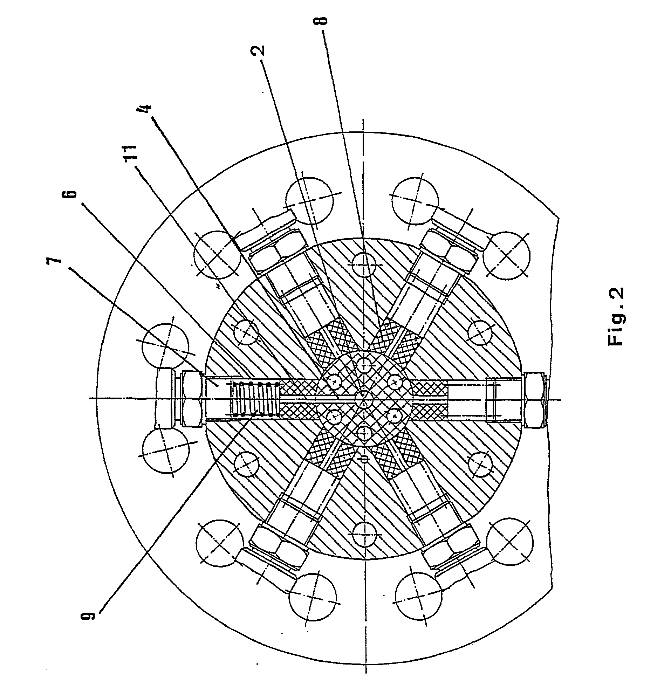

Die Drehdurchführung besteht bei dem Ausführungsbeispiel nach Figur 1–4 aus dem Stator 1, welcher einen axialen Kanal 2 aufweist, der in dem Endteil 3 in den radialen Kanal 4 übergeht. Der axiale Kanal 2 des Stators steht mit einer nicht weiter dargestellten Flüssigkeitszufuhr in Verbindung.

Der Stator 1 ist von dem Rotor 5 umgeben, welcher mehrere diesen radial durchsetzende Abgänge 6 aufweist. Im dargestellten Ausführungsfall finden insgesamt sechs sternförmig angeordnete Abgänge Verwendung, jedoch ist deren Anzahl beliebig.

In die äußeren Enden der Abgänge 6 sind Anschlußstutzen 7 eingeschraubt, an die nicht weiter dargestellte Verbindungsleitungen, beispielsweise in Form von Schläuchen, angeschlossen sind, die zu den Düsen der einzelnen Werkzeuge, beispielsweise einer Fräswalze, geführt sind. Der Rotor läuft mit der Fräswalze synchron um.

Die Abgänge 6 des Rotors 5 sind mit Büchsen 8 ausgerüstet, deren eine Stirnflächen auf der Umfläche des Endteils 3 des Stators 1 aufliegen, während die anderen Stirnflächen der Büchsen 8 unter der Einwirkung von Federn 9 stehen, die sich ihrerseits wieder an den Anschlußstutzen 7 abstützen.

Der Endteil 3 des Stators 1 ist an diesem mittels der von außen zugänglichen Schraubbolzen 10 befestigt, so daß der Endteil leicht und schnell ausgewechselt werden kann, um beispielsweise eine Veränderung des Sektors der zu bedüsenden Werkzeuge der Maschine vornehmen zu können.

Wie aus den Zeichnungen ersichtlich, fluchten die Kanäle 11 mit dem radialen Kanal 4 des Endteils 3 des Stators 1, so daß die aus dem radialen Kanal 4 austretende Flüssigkeit mittig durch die Kanäle 11 der Büchsen 8 aus den Abgängen 6 nach außen tritt.

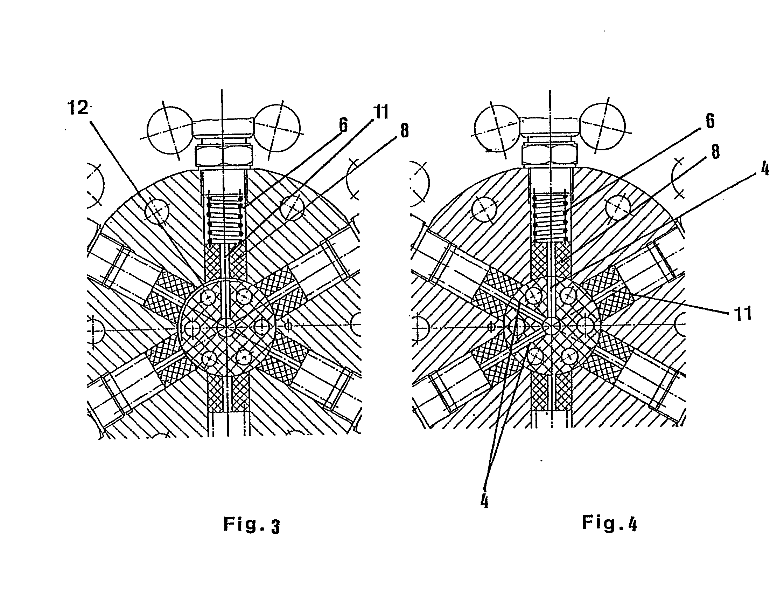

Wie aus Figur 3 ersichtlich, ist in der Umfläche des Stators im Bewegungsbereich der Kanäle 11 der Büchsen 8 in den Abgängen 6 eine in Umfangsrichtung des Endteils 3 des Stators 1 verlaufende Ausnehmung 12 derart angebracht und bemessen, daß diese jeweils zwei Kanäle 11 der Büchsen 8 zweier benachbarter Abgänge 6 mit dem radialen Kanal 4 des Endteils 3 des Stators 1 verbindet. Somit wird ein ganz bestimmter Sektor gebildet, weil fortlaufend immer neue Abgänge mit ihren Kanälen in den Bereich der Ausnehmung 12 gelangen und nach einem bestimmten Winkel diese wieder verlassen, wodurch die Druckmittelzufuhr in diese Abgänge geöffnet bzw. geschlossen wird. Um einen möglichst leichten Übergang zu erreichen, ist die Ausnehmung sowohl an ihrem Anfangs- als auch an ihrem Endbereich überlappend ausgeführt.

Bei der Ausführung nach Figur 4 sind im Endteil 3 des Stators 1 mehrere radiale Kanäle 4 vorgesehen, so daß auch auf diese Weise ein ganz bestimmter Sektor einstellbar ist, im dargestellten Falle sind somit ständig drei benachbarte Abgänge mit der Druckmittelzufuhr in Verbindung.

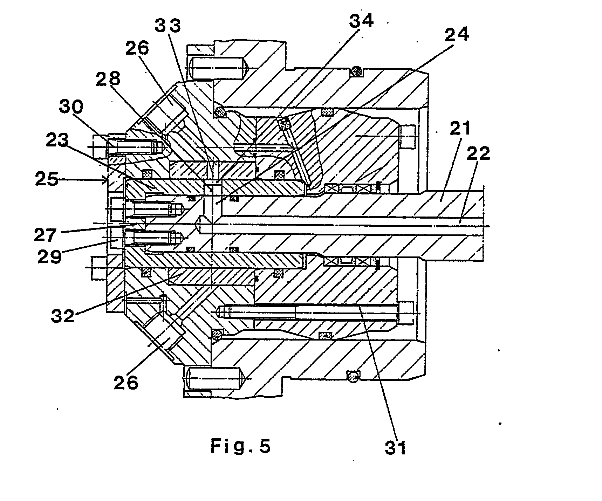

Bei der Ausführung nach Figur 5 besteht die Drehdurchführung aus dem Stator 21, welcher einen axialen Kanal 22 aufweist, der in den radialen Kanal 24 übergeht. Der axiale Kanal 22 des Stators 21 steht mit einer nicht weiter dargestellten Flüssigkeitszufuhr in Verbindung.

Der Stator 21 ist von dem Rotor 25 umgeben, welcher mehrere, diesen durchsetzende Abgänge 26 aufweist. Im dargestellten Ausführungsfall finden insgesamt sechs sternförmig angeordnete Abgänge Verwendung, jedoch ist deren Anzahl beliebig.

In die äußeren Enden der Abgänge 26 sind Anschlußstutzen eingeschraubt, an die nicht weiter dargestellte Verbindungsleitungen, beispielsweise in Form von Schläuchen, angeschlossen sind, die zu den Düsen der einzelnen Werkzeuge, beispielsweise einer Fräswalze, geführt sind. Der Rotor läuft mit der Fräswalze synchron um.

Der Stator 21 erstreckt sich mit seinem vom Rotor 25 umgebenden Ende in eine Büchse 23, welche mit einem Boden 27 einendig geschlossen ist, an welcher die Stirnseite des Rotors 21 anliegt. Die Büchse 23 mit Boden 27 ersetzt das Endteil bei der Ausführung nach Figur 1 bis Figur 4. Die Büchse 23 weist mindestens eine, diese radial durchsetzende, mit dem radialen Kanal 24 des Stators 21 fluchtende Durchtrittsöffnung 28 auf. Der Boden 27 der Büchse 23 ist von Schraubbolzen 29 durchsetzt, die axial in den Stator 21 eingeschraubt sind. Durch Lösen dieser Schraubbolzen 29 kann das ganze Verteilergehäuse ausgebaut und/oder verstellt werden.

Mittels der Schraubbolzen 30 wird das Verteilergehäuse des Rotors 25 gehalten, wobei dessen Teile insgesamt durch die Schraubbolzen 31 miteinander verbunden sind.

Auf die Büchse 23 ist ein Rohrstück 32 aufgeschoben, welches entsprechend der Anzahl der Abgänge 26 des Rotors 25 mit radialen Durchtritten 33

ausgerüstet ist, die mit den Abgängen 26 des Rotors 25 in Verbindung stehen. Das Rohrstück 32 ist in eine entsprechend gestaltete Ausnehmung des Rotors 25 eingesetzt.

Das Rohrstück 23 ersetzt die Büchsen 8 in den einzelnen Abgängen 26 bei der Ausführung nach Figur 1 bis Figur 4.

In der Büchse 23 ist in deren Umfläche im Bewegungsbereich der Kanäle 33 des Rohrstückes 32 eine in Umfangsrichtung der Büchse 23 verlaufende Ausnehmung 34 derart angebracht und bemessen, daß diese jeweils zwei Kanäle 33 des Rohrstückes 32 mit dem radialen Kanal 24 des Stators 21 verbindet. Somit wird ein ganz bestimmter Sektor gebildet, weil fortlaufend immer neue Abgänge 26 mit ihren Kanälen in den Bereich der Ausnehmung 34 gelangen und nach einem bestimmten Winkel diese wieder verlassen, wodurch die Druckmittelzufuhr in diese Abgänge geöffnet bzw. geschlossen wird. Um einen möglichst leichten Übergang zu erreichen, ist die Ausnehmung sowohl an ihrem Anfangs- als auch an ihrem Endbereich überlappend ausgeführt.

Die Büchse 23 und/oder das Rohrstück 32 sind aus Keramikmaterial hergestellt, so daß nicht nur eine Korrosion mit Sicherheit ausgeschlossen ist, sondern auch durch das zu fördernde Wasser, welches über keine Schmierwirkung verfügt, ein Verschleiß nicht auftreten kann.

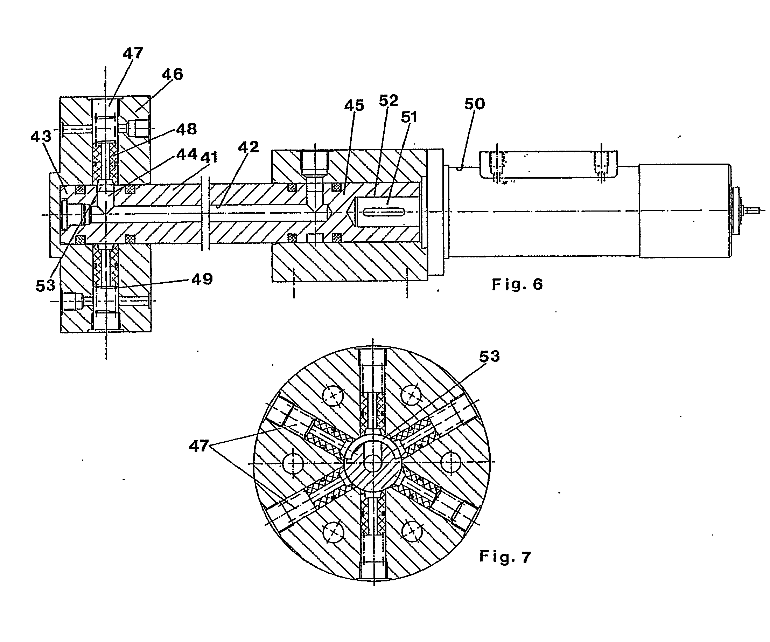

Die Drehdurchführung besteht bei der Ausführung nach Figur 6 bis Figur 9 aus dem Stator 41, welcher einen axialen Kanal 42 aufweist, der in seinem einen Ende 43 in den radialen Kanal 44 übergeht. Der axiale Kanal 42 des Stators 41 steht über einen weiteren radialen Kanal an seinem anderen Ende 45 mit einer nicht dargestellten Flüssigkeitszufuhr in Verbindung.

Der Stator 41 ist von dem Rotor umgeben, welcher mehrere diesen radial durchsetzende Abgänge 47 aufweist.

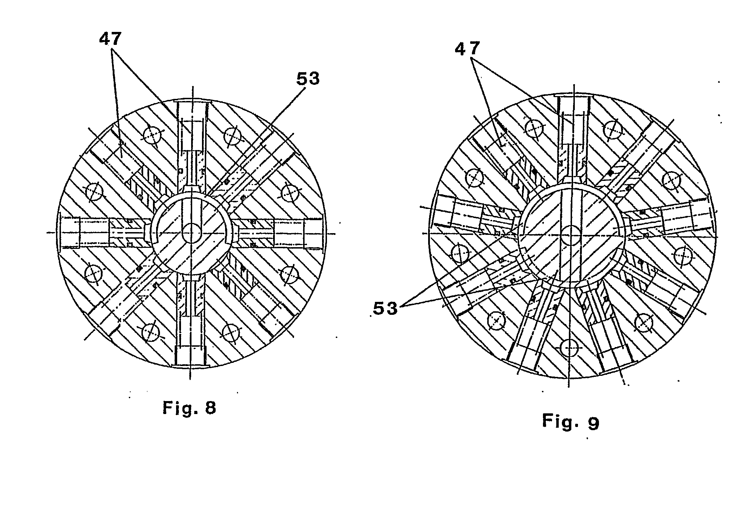

Bei der Ausführung nach Figur 7 finden insgesamt sechs, bei der nach Figur 8 finden acht und bei der nach Figur 9 neun sternförmig angeordnete Abgänge 47 Verwendung, deren Anzahl beliebig ist, wie die Ausführungsbeispiele zeigen.

In die äußeren Enden der Abgänge 47 sind nicht dargestellte Anschlußstutzen eingeschraubt, an die Verbindungsleitungen, beispielsweise in Form von Schläuchen, angeschlossen sind, die zu den Düsen der einzelnen Werkzeuge beispielsweise einer Fräswalze, geführt sind. Der Rotor 46 läuft mit der Fräswalze synchron um.

Die Abgänge 47 des Rotors 46 sind mit Büchsen 48 ausgerüstet, deren eine Stirnflächen auf der Umfläche des einen Endes 43 des Stators 41 aufliegen, während die anderen Stirnflächen der Büchsen 48 unter der Einwirkung von Federn 49 stehen, die sich ihrerseits wieder an Einsätzen der Abgänge 47 abstützen.

Das hintere Ende 45 des Stators 41 ist mit einem Schwenkantrieb 50 gekuppelt, welcher mit seinem Antriebszapfen 51 in eine diesem in ihrer Formgebung angepaßte Ausnehmung 52 eingreift.

An seinem von dem Rotor 46 umgebenen vorderen Ende 43 ist der Stator 41 seiner Umfläche im Bereich der Abgänge 47 des Rotors 46 mit einer Ringnut 53 ausgerüstet, welche sich über einen Teil des Umfanges des Stators 41 erstreckt.

Bei der Ausführung nach Figur 6 und 7 erstreckt sich die Ringnut 53 über einen Winkelbereich von vorzugsweise 150 Grad.

Bei der Ausführung nach Figur 8 erstreckt sich die Ringnut über einen Bereich von 190–200 Grad, während bei der Ausführung nach Figur 9 zwei Ringnuten 53 vorgesehen sind, von denen sich die in der Zeichnung obere etwa über 180 Grad erstreckt, während die in der Zeichnung untere etwa 160 Grad beträgt.

Durch Beaufschlagung des Schwenkantriebes 50 führt der Stator 41 eine Schwenkbewegung aus, so daß die Ringnut 53 nunmehr mit einem neuen sektoriellen Bereich der Abgänge 47 in Verbindung gelangt. Entsprechendes gilt für die Ausführungen nach Figur 8 und 9. Auf diese Weise ist somit in einfacher und schneller Weise ein beliebige Steuerung der gewünschten Sektoren, beispielsweise über einen Bereich von 90 bis 270 Grad, möglich.

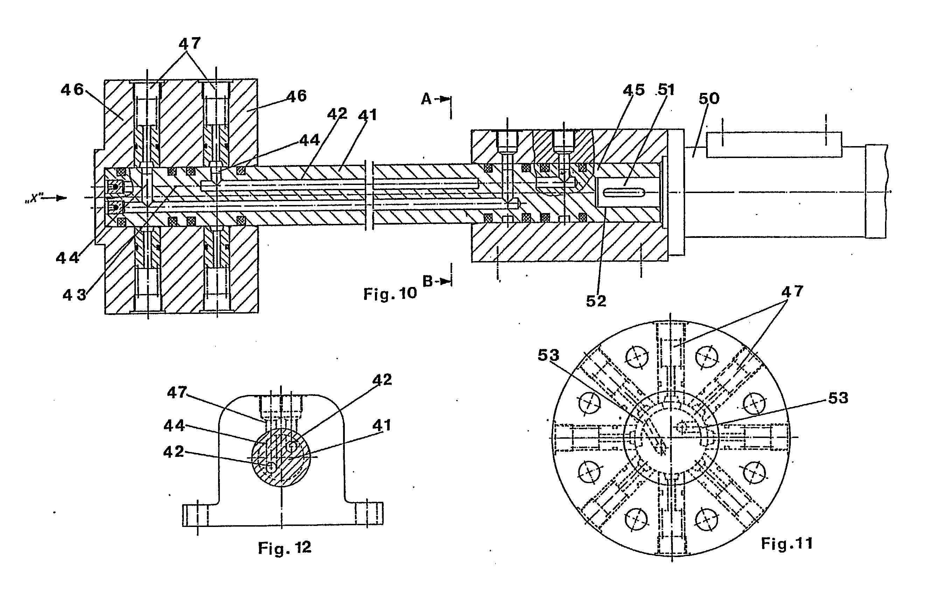

Bei der Ausführung nach Figur 10 bis 12 sind zwei Rotoren 46 vorgesehen, welche zu einer Baueinheit zusammengefaßt sind. Jedem Rotor 46 ist ein radialer Kanal 44 des Stators 41 zugeordnet. Die radialen Kanäle 44 münden jeweils in voneinander getrennte axiale Kanäle 42 des Stators 41. Diese sind am Ende 45 des Stators jeweils mit einer nicht dargestellten Flüssigkeitszufuhr verbunden.

Wie aus Figur 11 ersichtlich, überschneiden sich die beiden den einzelnen Rotoren 46 zugeordneten Ringnuten 53 des Stators 41 um ein gewisses Maß, so daß eine Überlappung der sektoriellen Bereiche gegeben ist.

Bei der Ausführung nach Figur 6 bis 12 ist es möglich, die sektoriellen Bereiche beider Rotoren 46 durch Verschwenken des Stators 41 einzustellen, so daß sich eine stufenlos einstellbare Steuerung ergibt, die in schneller und einfacher Weise durchführbar ist.

**Patentansprüche**

1. Drehdurchführung zur Beaufschlagung der Schneiden von Werkzeugen von Vortriebs- und Abbaumaschinen für den Berg- oder Tunnelbau mit einer Flüssigkeit, bestehend aus einem mit einer Flüssigkeitszufuhr verbundenen Stator und einem diesen umgebenden Rotor mit mehreren Abgängen zur Bedüsung der Schneiden der Werkzeuge, wobei Stator und Rotor zum Durchtritt der Flüssigkeit über Kanäle oder dgl. verbunden sind, und die Abgänge des Rotors diesen radial durchsetzen und diesen mindestens ein radial angeordneter Kanal des Stators zugeordnet ist, welcher in einen axial verlaufenden Kanal des Stators einmündet, dadurch gekennzeichnet, daß die Abgänge (6, 47) des Rotors (5, 25, 45) mit Büchsen (8, 48) ausgerüstet sind, deren eine Stirnflächen auf der Umfläche des Stators (1, 41) aufliegen und deren andere Stirnflächen unter der Einwirkung von Federn (9, 49) stehen.

2. Drehdurchführung nach Anspruch 1, dadurch gekennzeichnet, daß der Stator (1) im Bewegungsbereich der Abgänge (6) des Rotors (5) einen Endteil (3) besitzt, welcher mittels Schraubbolzen (10) mit dem übrigen Teil des Stators (1) verbunden ist, und in der Umfläche des Endteils (3) des Stators (1) im Bewegungsbereich der Kanäle (11) der Büchsen (8) der Abgänge (6) des Rotors (5) eine oder mehrere in Umfangsrichtung des Stators (1) verlaufende Ausnehmung (12) bzw. Ausnehmungen derart angebracht und bemessen ist bzw. sind, daß diese jeweils mindestens zwei Kanäle (11) der Büchsen (8) benachbarter Abgänge (6) des Rotors (5) mit dem radialen Kanal (4) des Stators (1) verbindet bzw. verbinden.

3. Drehdurchführung nach Anspruch 2, dadurch gekennzeichnet, daß im Stator (1) mehrere, vorzugsweise drei, radiale Kanäle (4) in einer Ebene von dem axialen Zuführungskanal (2) ausgehen.

4. Drehdurchführung nach Anspruch 2, dadurch gekennzeichnet, daß mindestens der eine Endteil (3) des Stators (1) und/oder die Büchsen (8) der Abgänge (6) des Rotors (5) aus Keramik hergestellt sind.

5. Drehdurchführung nach Anspruch 1, dadurch gekennzeichnet, daß der Stator (21) sich mit seinem vom Rotor (25) umgebenden Ende in einen Verteiler (23) erstreckt, welcher mittels eines Bodens (27) einendig geschlossen ist und mindestens eine, diese radial durchsetzende, mit dem radialen Kanal (24) des Stators (21) fluchtende Durchtrittsöffnung (28) aufweist.

6. Drehdurchführung nach Anspruch 5, dadurch gekennzeichnet, daß der Boden (27) des Verteilers (23) von Schraubbolzen (29) durchsetzt ist, die axial in den Stator (21) eingeschraubt sind.

7. Drehdurchführung nach Anspruch 5, dadurch gekennzeichnet, daß anstelle der Büchse (8) ein Rohrstück (32) Verwendung findet, welches auf den Verteiler (23) aufgeschoben ist und entsprechend der Anzahl der Abgänge (26) des Rotors (25) mit radialen Durchtritten (33) ausgerüstet ist, die mit den Abgängen (26) des Rotors (25) verbunden sind, wobei das Rohrstück (32) in eine entsprechend gestaltete Ausnehmung des Rotors (25) eingesetzt ist.

8. Drehdurchführung nach Anspruch 5, dadurch gekennzeichnet, daß in der Umfläche des Verteilers (23) im Bewegungsbereich der radialen Durchtritte (33) des Rohrstückes (32) eine oder mehrere in Umfangsrichtung des Verteilers (23) verlaufende Ausnehmung (34) bzw. Ausnehmungen derart angebracht und bemessen ist bzw. sind, daß diese jeweils mindestens zwei radiale Durchtritte (33) des Rohrstückes (32) benachbarter Abgänge (26) des Rotors (25) mit dem radialen Kanal (24) des Stators (21) verbindet bzw. verbinden.

9. Drehdurchführung nach Anspruch 5, dadurch gekennzeichnet, daß im Stator (21) mehrere, vorzugsweise drei, radiale Kanäle (24) in einer Ebene von dem axialen Zuführungskanal (22) ausgehen.

10. Drehdurchführung nach Anspruch 5 oder 7, dadurch gekennzeichnet, daß mindestens der Verteiler (23) und/oder das Rohrstück (32) aus Keramik hergestellt sind.

11. Drehdurchführung nach Anspruch 5, dadurch gekennzeichnet, daß das hintere Ende (45) des Stators (41) mit einem Schwenkantrieb (50) gekuppelt ist und das von einem oder mehreren Rotoren (46) umgebene vordere Ende (43) des Stators (41) in seiner Umfläche im Bereich der Abgänge (47) des Rotors (46) bzw. der Rotoren (46) mit einer oder mehreren Ringnuten (53) ausgerüstet ist, welche sich über einen Teil des Umfanges des Stators (41) erstreckt bzw. erstrecken, wobei der Stator (41) für jeden Rotor (46) mit einem axialen Kanal (42) ausgerüstet ist.

12. Drehdurchführung nach Anspruch 11, dadurch gekennzeichnet, daß der Rotor (46) aus einer Scheibe besteht, welche von den Abgängen (47) radial durchsetzt ist.

13. Drehdurchführung nach Anspruch 11, dadurch gekennzeichnet, daß zwei oder mehr Rotoren (46) in Form von Scheiben auf dem vorderen Ende (43) des Stators (41) angeordnet sind.

14. Drehdurchführung nach Anspruch 11, dadurch gekennzeichnet, daß zwei oder mehr Rotoren (46) in einem gemeinsamen Gehäuse angeordnet sind.

15. Drehdurchführung nach Anspruch 11, dadurch gekennzeichnet, daß bei Vorhandensein mehrerer Rotoren (46) die deren Abgängen (47) zugeordneten Ringnuten (53) des Stators in ihren Erstreckungen einander überschneiden.

**Claims**

1. Rotary leadthrough for delivering a liquid to the cutting edges fo roadheading and mining machines for mining or tunnelling and consisting of a stator connected to a supply of liquid and, enclosing the stator, a rotor having a plurality of outlets for sprinkling the cutting edges of the tools, stator and rotor being connected by passages or the like through which the liquid can pass, the outlets from the rotor traversing the latter radially and having associated with them at least one radially disposed passage in the stator and discharging into an axially extending passage in the stator, characterised in that the outlets (6, 47) from the rotor (5, 25, 45) are equipped with bushes (8, 48) of which one end face bears on the peripheral land of the stator (1, 41) while the other end faces thereof are subject to the action of springs (9, 49).

2. Rotary leadthrough according to Claim 1, characterised in that the stator (1) has in the range of movement of the outlets (6) of the rotor (5) an end part (3) which is connected by screwbolts (10) to the rest of the stator (1), while in the peripheral land of the end part (3) of the stator (1), in the range of movement of the passages (11) of the bushes (8) of the outlets (6) of the rotor (5) there is or are provided and dimensioned one recess (12) or a plurality of recesses (12) extending in the peripheral direction of the stator (1) in such a way that it or these connects or connect in each case at least two passages (11) of the bushes (8) of adjacent outlets (6) of the rotor (5) to the radial passage (4) of the stator (1).

3. Rotary leadthrough according to Claim 2, characterised in that in the stator (1) a plurality of and preferably three radial passages (4) emerge in one plane from the axial feed passage (2).

4. Rotary leadthrough according to Claim 2, characterised in that at least one end part (3) of the stator (1) and/or the bushes (8) of the outlets (6) of the rotor (5) are produced from ceramic material.

5. Rotary leadthrough according to Claim 1, characterised in that the stator (21) has an end which is enclosed by the rotor (25) extending into a distributor (23) which is closed at one end by an end piece (24) and which has at least one through-flow passage (28) aligned with the radial passage (24) in the stator (21) and traversing the distributor (23) in a radial direction.

6. Rotary leadthrough according to Claim 5, characterised in that the end member (27) of the distributor (23) is traversed by screwbolts (29) which are screwed axially into the stator (21).

7. Rotary leadthrough according to Claim 5, characterised in that instead of the bush (8), a portion of tube (32) is used which is pushed onto the distributor (23) and which, in accordance with the number of outlets (26) from the rotor (25), is provided with radial passages (33) which are connected to the outlets (26) from the rotor (25), the portion of tube (32) being inserted into a correspondingly shaped recess in the rotor (25).

8. Rotary leadthrough according to Claim 5, characterised in that in the range of movement of the radial passages (33) of the tube portion (32), a recess (34) or a plurality of recesses (34) is or are so provided and dimensioned in the peripheral land of the distributor (23) that it or they connects or connect in each case at least two radial passages (33) of the tube portion (32) of adjacent outlets (26) from the rotor (25) with the radial passage (24) in the stator (21).

9. Rotary leadthrough according to Claim 5, characterised in that in the stator (21) a plurality of and preferably three radial passages (24) emerge in one plane from the axial feed passage (22).

10. Rotary leadthrough according to Claim 5 or 7, characterised in that at least the distributor (23) and/or the tube portion (32) are produced from ceramic material.

11. Rotary leadthrough according to Claim 5, characterised in that the rear end (45) of the stator (41) is coupled to a pivot drive (50), the front end (43) of the stator (41) which is enclosed by one or a plurality of rotors (46) being in its peripheral land, in the region of the outlets (47) from the rotor (46) or rotors (46) equipped with one or a plurality of annular grooves (53) extending over a part of the periphery of the stator (41), the stator (41) being provided with an axial passage (42) for each rotor (46).

12. Rotary leadthrough according to Claim 11, characterised in that the rotor (46) consists of a disc which is radially traversed by the outlets (47).

13. Rotary leadthrough according to Claim 11, characterised in that two or more rotors (46) in the form of discs are disposed on the front end (43) of the stator.

14. Rotary leadthrough according to Claim 11, characterised in that two or more rotors (46) are disposed in a common housing.

15. Rotary leadthrough according to Claim 11, caracterised in that if a plurality of rotors (46) are provided, the annular grooves (53) in the stator which are associated with their outlets (47) the extended paths of the said grooves (53) overlap one another.

## Revendications

1. Passage tournant pour la commande par un liquide des lames d'outils d'abatteuses-chargeuses pour creusement dans l'exploitation des mines ou la construction de tunnels, comprenant un stator, relié à une amenée de liquide, et un rotor entourant celui-ci et muni de plusieurs sorties pour l'arrosage des lames des outils, le stator et le rotor étant raccordés par des canaux ou analogues pour le passage du liquide, et les sorties du rotor traversant radialement celui-ci et à ces sorties étant associé au moins un canal du stator qui est disposé radialement et débouche dans un canal du stator disposé axialement, caractérisé par le fait que les sorties (6, 47) du rotor (5, 25, 45) sont munies de douilles (8, 48) dont une surface frontale est appliquée sur la surface périphérique du stator (1, 41) et l'autre surface frontale est soumise à l'action d'un ressort (9, 49).

2. Passage tournant selon la revendication 1, caractérisé par le fait que le stator (1), dans la zone du déplacement des sorties (6) du rotor (5), comporte une pièce d'extrémité (3) qui est raccordée au reste du stator (1) par des boulons filetés (10) et que dans la surface périphérique de la pièce d'extrémité (3) du stator (1), dans la zone du déplacement des canaux (11) des douilles (8) des sorties (6) du rotor (5), est ou sont pratiqué(s) un ou plusieurs évidement(s) (12) disposé(s) dans le sens périphérique du stator (1) et dimensionné(s) de façon à relier respectivement au moins deux canaux (11) des douilles (8) de sorties voisines (6) du rotor (5) au canal radial (4) du stator (1).

3. Passage tournant selon la revendication 2, caractérisé par le fait que dans le stator (1) plusieurs canaux radiaux (4), de préférence trois, partent dans un même plan du canal d'amenée axial (2).

4. Passage tournant selon la revendication 2, caractérisé par le fait qu'au moins la pièce d'extrémité (3) du stator (1) et/ou les douilles (8) des sorties (6) du rotor (5) sont réalisées en céramique.

5. Passage tournant selon la revendication 1, caractérisé par le fait que le stator (21) par son extrémité entourée par le rotor (25), s'étend dans un distributeur (23) qui est fermé à une extrémité par un fond (27) et comporte une ouverture de passage (28) qui le traverse radialement et qui est disposée dans l'alignement du canal radial (24) du stator (21).

6. Passage tournant selon la revendication (5), caratérisé par le fait que le fond (27) du distributeur (23) est traversé par des boulons filetés (29) qui sont vissés axialement dans le stator (21).

7. Passage tournant selon la revendication (5), caractérisé par le fait qu'à la place de la douille (8), on utilise un tronçon tubulaire (32) qui est enfoncé sur le distributeur (23) et équipé de passages radiaux (33) qui correspondent au nombre des sorties (26) du rotor (25) et qui sont raccordés aux sorties (26) du rotor (25), le tronçon tubulaire (32) étant engagé dans un évidement de forme correspondante du rotor (25).

8. Passage tournant selon la revendication (5), caractérisé par le fait que dans la surface périphérique du distributeur (23), dans la zone du déplacement des passages radiaux (33) du tronçon tubulaire (32), est ou sont pratiqué(s) un ou plusieurs évidement(s) (34) qui est ou sont disposé(s) dans le sens périphérique du distributeur (23) et dimensionné(s) de façon à raccorder respectivement au moins deux passages radiaux (33) du tronçon tubulaire (32) de sorties voisines (26) du rotor (25) au canal radial (24) du stator (21).

9. Passage tournant selon la revendication 5, caractérisé par le fait que dans le stator (21) plusieurs canaux radiaux (24), de préférence trois, partent dans un même plan du canal d'amenée axial (22).

10. Passage tournant selon la revendication 5 ou 7, caractérisé par le fait qu'au moins le distributeur (23) et/ou le tronçon tubulaire (32) sont réalisés en céramique.

11. Passage tournant selon la revendication 5, caractérisé par le fait que l'extrémité arrière (45) du stator (41) est accouplée à un mécanisme de pivotement (50) et que l'extrémité avant (43) du stator (41), entourée par un ou plusieurs rotors (46), est équipée dans sa surface périphérique dans la zone des sorties (47) du rotor (46) ou des rotors (46) d'une ou de plusieurs rainure(s) annulaire(s) (53) qui s'étend ou s'étendent sur une partie de la périphérique du stator (41), le stator (41) étant équipé d'un canal axial (42) pour chaque rotor (46).

12. Passage tournant selon la revendication 11, caractérisé par le fait que le rotor (46) est constitué par un disque qui est traversé radialement par les sorties (47).

13. Passage tournant selon la revendication 11, caractérisé par le fait que deux ou plusieurs rotors (46) sont disposés en forme de disque sur l'extrémité avant (43) du stator (41).

14. Passage tournant selon la revendication 11, caractérisé par le fait que deux ou plusieurs rotors (46) sont disposés dans un carter commun.

15. Passage tournant selon la revendication 11, caractérisé par le fait qu'en cas de plusieurs rotors (46) les rainures annulaires (53) du stator qui sont associées aux sorties (47) du rotor, se coupent dans leurs étendues.

EP 0 194 561 B1

Fig.1

Fig.2

Fig. 4

Fig. 3

Fig. 5

Fig. 6

Fig. 7

Fig. 9

Fig. 8

47

46    46    42  41    A    45  51    50

44

"X"

44

43

Fig. 10    B

52

EP 0 194 561 B1

47    42

44

42    41

Fig. 12

53    47

53

Fig. 11